(19)

Europäisches
Patentamt
European
Patent Office
Office européen
des brevets

(11) **EP 2 296 070 A1**

(12) **EUROPEAN PATENT APPLICATION**

(43) Date of publication:
**16.03.2011 Bulletin 2011/11**

(51) Int Cl.:
***G05D 1/00*** *(2006.01)*

(21) Application number: **09179485.9**

(22) Date of filing: **16.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **03.03.2009 US 396653**

(71) Applicant: **Honeywell International Inc.
Morristown, NJ 07962 (US)**

(72) Inventors:
• **Hamke, Eric E.
Morristown, NJ 07692-2245 (US)**
• **Ihlein, John
Morristown, NJ 07962-2245 (US)**

(74) Representative: **Buckley, Guy Julian
Patent Outsourcing Limited
1 King Street
Bakewell
Derbyshire DE45 1DZ (GB)**

(54) **UAV flight control method and system**

(57)     Disclosed herein is a method and system for flying a ducted-fan air-vehicle, such as an unmanned air-vehicle. The method includes receiving a first input associated with a target point of interest and pointing the gimbaled sensor at the target point of interest. The method further includes receiving a second input corresponding to a desired flight path and selecting a velocity vector flight command to achieve the desired flight path. Selecting the velocity vector flight command includes converting attitude data from the gimbaled sensor into a velocity vector flight command. The method further includes operating the flight of the UAV according to the selected velocity vector flight command and the gimbaled sensor remains fixed on the target point of interest during the flight of the UAV.

FIG. 2

## Description

The United States Government may have acquired certain rights in this invention pursuant to Contract No. MDA972-01-9-0018 awarded by the Defense Advanced Research Projects Agency (DARPA).

## FIELD OF THE INVENTION

The disclosure is directed to ducted-fan air-vehicles, such as an unmanned air-vehicle (UAV), and in particular, the flight of a ducted-fan air-vehicle.

## BACKGROUND

Ducted-fan air-vehicles are known for their superior stationary aerodynamic hovering performance, three-dimensional precision position hold, low speed flights, and precision vertical take-off and landing (VTOL) capabilities. In addition, the duct provides protection from contact with the rotating fan blade close in operations.

As such, ducted-fan air-vehicles, and in particular, unmanned air-vehicles (UAVs) implementing ducted-fans, are increasingly being deployed in battlefield scenarios. For instance, typical UAV operations may include reconnaissance and surveillance, navigating for troops and ground vehicles, and non-line-of-sight targeting. Accordingly, a UAV may be configured to detect enemy troops and vehicles in areas where ground forces (or even aerial forces) lack a direct line-of-sight. In effect, UAVs may become "sentinels" for troops as they move into enemy territory.

For operation of a UAV during, for example, a reconnaissance mission, an operator or operators of the UAV need to control the flight of the UAV in addition to operating a UAV camera in order to obtain imagery of objects of interest. An operator typically needs to divide time between the flight of the UAV and observing an object of interest. For example, with sensors mounted to a UAV, the UAV's attitudes must be constantly updated to hold a position and the operator is forced to share his or her attention between flying the UAV and obtaining and/or analyzing the imagery. Alternatively, two operators may be required in order to operate a UAV during a reconnaissance mission. For example, a first operator may fly the UAV and a second operator may control the camera on the UAV in order to obtain the desired imagery of any objects of interest.

## SUMMARY

The present disclosure describes a method for controlling flight of a UAV and a UAV system. The method for controlling flight of a UAV having a gimbaled sensor includes receiving a first input associated with a target point of interest and pointing the gimbaled sensor at the target point of interest. The method further includes receiving a second input corresponding to a desired flight path. A velocity vector flight command to achieve the desired flight path may be selected, and selecting the velocity vector flight command may include converting attitude data from the gimbaled sensor into the velocity vector flight command. The method further includes operating the flight of the UAV according to the selected velocity vector flight command. During this flight of the UAV, the gimbaled sensor remains fixed on the target point of interest.

## BRIEF DESCRIPTION OF THE DRAWINGS

An exemplary embodiment of the present invention is described herein with reference to the drawings, in which:

    Figure 1 is a pictorial representation of a UAV having a gimbaled sensor, according to an example; and
    Figure 2 is a flow chart depicting a method for controlling the flight of a UAV, such as the UAV depicted in Figure 1.

## DETAILED DESCRIPTION

In an exemplary embodiment, the ducted-fan air-vehicle may take the form of a UAV. For example, the ducted-fan air-vehicle may take the form of a micro air-vehicle (MAV). Alternatively, the ducted-fan air-vehicle may take the form of an organic air-vehicle (OAV). Currently, the U.S. government has funded development of two classes of OAVs - smaller class I OAVs and larger class II OAVs. The invention may be described herein by way of example, with reference to an MAV. However, it will be understood by one skilled in the art that the invention can extend to class I or class II OAVs, as well as other types of OAVs, UAVs, and ducted-fan air-vehicles.

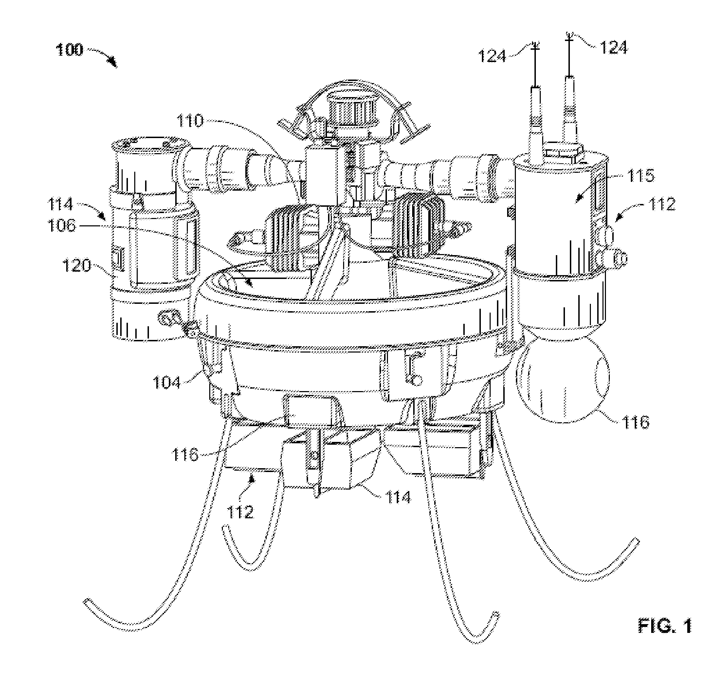

Figure 1 is a pictorial representation of an MAV 100. The MAV 100 includes a duct 104 and a fan 106 located within the air duct 104. Additionally, the MAV 100 may have a center body 110. The center body may include components operation of MAV 100. For example, the center body may include an engine for powering the MAV 100.

In addition to center body 110, an MAV may also include at least one pod that houses additional components of the MAV. For instance, MAV 100 includes pod 112 and pod 114. Pod 112 may have a gimbaled sensor attached, such as a gimbaled camera 116. The pod 112 may also house other components, such as the gimbaled camera control system, GPS, a radio, and a video link for imagery. The gimbaled camera controls may include a processor 115. The processor 115 may be any combination of hardware, firmware, and/or software operable to interpret and execute instructions, typically from a software application. For example, the processor 115 may be a microcontroller, a microprocessor, or an application-specific integrated circuit (ASIC).

Pod 114 may include additional MAV components, such as an avionics or navigation system. The avionics system may include a processor. Similar to the gimbaled camera control processor, this processor may be any combination of hardware, firmware, and/or software operable to interpret and execute instructions, typically from a software application. Alternatively, the processor that controls the avionics system may be the same processor that controls the gimbaled camera control system. The avionics system 120 may be coupled to the gimbaled camera control system and the gimbaled camera. In conjunction with the gimbaled camera and gimbaled camera controls, the avionics system 120 may control the OAV 100 by controlling the altitude, positioning, and forward speeds of the OAV 100. The avionics system 120 in conjunction with the gimbaled camera control system may control the aircraft using various inputs. For instance, the avionics system 120 may use inputs, such as gimbaled camera angles, inertial sensors, GPS, and airflow speed and direction, in order to control the OAV 100.

It should be understood that the MAV components located in pods may be arranged in other ways. Further, additional pods or fewer pods are possible. In an exemplary embodiment, the pods and components stored in them are preferably selected in order to maintain the center of gravity of the MAV. The MAV 100 may also include an antenna or antennas, such as antennas 124. Antennas 124 may allow the MAV to receive and transmit signals, such as navigation signals and imagery signals.

MAV 100 may also include a stator assembly 112 and vanes 114. Stator assembly 112 and vanes 114 may be located under the fan 106 located within the duct 104. Stator assembly 112 may be located just under the fan 106 in the duct 104 and may operate to flow swirl aft of the fan 106 (i.e., straightening the swirling air flow produced by the fan). Vanes 114 may also be placed under the fan 106, and may operate to create control moments for MAV 100. For instance, the vanes 114 may be placed slightly below an exit section 116 of the air duct 104. MAV 100 may contain fixed and/or movable vanes. Once the vehicle has launched, control vanes 114 receive signals to control the direction of flight. Control vanes move in response to the signals, altering the course of airflow from the fan 106 which guides the direction of flight for the vehicle.

MAV 100 may operate at altitudes of, for example, 100 feet (about 30.48 meters) to 500 feet (about 152.4 meters) above ground level, and typically, the MAV will fly between 10 feet (about 3.05 meters) and 500 feet (about 152.4 meters) above the ground. The MAV can provide forward and down-looking day or night video or still imagery. The MAV may operate in a variety of weather conditions including rain and moderate winds. The MAV system requires minimal operator training. Ground stations, such as portable ground stations, may be used to guide the aircraft and receive images from the gimbaled camera or cameras. The ground station may be used to program a flight path or portions of a flight path for the MAV or control the flight path or portions of the flight path manually. The gimbaled camera may be an electro-optical camera for daylight operations or infrared cameras for night missions. Any camera suitable for any type or time of mission may be used.

MAV 100 is capable of running autonomously, executing simple missions such as a program or reconnaissance. Preferably, the MAV 100 runs under the control of an operator. As mentioned above, MAVs typically require a crew comprising a pilot and a sensors operator. A pilot may drive an MAV using controls that transmit commands over, for example, a C-band line-of-sight data link or a Ku-Band satellite link. An MAV may receive orders via an L-3 Com satellite data link system. The pilot(s) and other crew member(s) may use images and radar received from the MAV to make decisions regarding control of the MAV and to control the imagery received by the MAV.

Unlike a typical MAV, MAV 100 preferably only requires a single operator to both fly the vehicle and obtain the desired imagery. It should be understood, however, that while generally not required, two or more operators may operate an MAV in accordance with embodiments, such as MAV 100. In MAV 100, the gimbaled sensor, such as gimbaled camera 116, is coupled with the flight controls, such as avionics system 120. Such gimbaled sensor integration into MAV 100 tightly couples the gimbaled sensor pointing and the aircraft control system, which, in an exemplary embodiment, eliminates the need for crews of two or more operators. MAV 100 includes on-board software, such as software for flight planning, guidance, and flight controls, that operates to fly the air-vehicle while the operator is free to concentrate on obtaining the desired imagery. A system with such tightly integrated gimbaled sensors and flight controls allows the MAV operator to concentrate on the imagery being acquired and not have to think about flying the vehicle and observing the objects of interest at the same time. In an exemplary embodiment, vehicle motion of MAV 100 is resolved relative to a point of interest and not to what the vehicle is currently doing. In other words, the flight of MAV 100 is controlled relative to the target object of interest where the gimbaled camera is pointing.

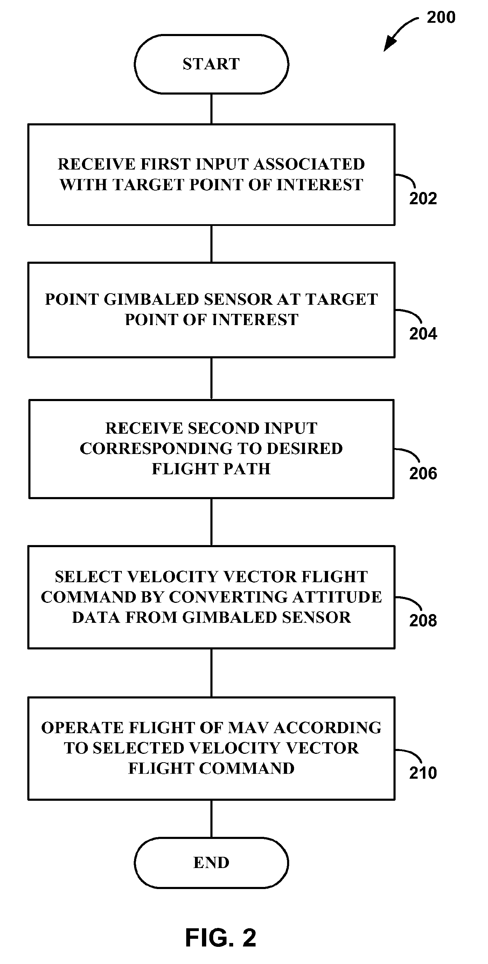

Fig. 2 is a flow chart depicting a method 200 for operating a UAV having a gimbaled sensor, such as MAV 100.

The example depicted in Fig. 2 shows steps performed by MAV 100. However, it should be understood that these steps could be performed by a UAV in conjunction with other entities, such as a ground control system.

At block 202, MAV 100 receives a first input associated with a target point of interest. At block 204, MAV 100 points the gimbaled sensor at the target point of interest. At block 206, MAV 100 receives a second input corresponding to a desired flight path. Then, at block 208, MAV 100 selects velocity vector flight commands to achieve the desired flight path by converting attitude data from the gimbaled sensor into velocity vector flight commands.

After selecting the velocity vector flight commands, at block 210, MAV 100 operates the flight of the MAV according to the selected velocity vector flight commands. The tightly integrated gimbaled camera sensor and flight controls then fly the vehicle according to the desired flight path and the gimbaled camera remains focused on the object of interest during the flight. The flight controls are resolved around where the gimbaled camera is pointing such that the MAV flies on the desired flight path while the gimbaled camera remains focused on the object of interest. These steps of method 200 are described in greater detail in the following subsections.

### i. Receiving an Input for and Pointing the Gimbaled Sensor at the Target Point of Interest

As mentioned above, an MAV in accordance with embodiments allows the operator to select an object of interest and fly the vehicle in a desired path toward, away, around, etc. the object of interest. In order to achieve this capability, MAV 100 may receive an input associated with a target point of interest from a ground control system. Preferably, the ground control system includes an operator control unit (OCU) and a ground data terminal (GDT). The OCU is the operator's display and data entry device, and the OCU may comprise the touch screen that allows the operator to enter a target object of interest. The GDT may include uplink and downlink communication radios for receiving and sending communication signals to MAV 100. The operator may tap an object of interest on the operator's map display unit. The object of interest may be a point of interest. For example, the point of interest may be a point on the horizon or a target object such as an enemy base camp. Other examples are possible as well.

After receiving an input associated with the target point of interest, MAV 100 may point the gimbaled camera 116 at the target point of interest and fly the vehicle in a desired path toward, away, around, etc. the object of interest.

### ii. Receiving an Input corresponding to a Desired Flight Path

MAV 100 may also receive an input corresponding to a desired flight path relative to the target object of interest. MAV 100 may receive this input from the ground control system. An operator may choose a desired flight path toward, away, around, etc. the target point of interest. The flight path may be chosen based on the flight path the operator desires the vehicle to fly according to. This may depend on a variety of factors. For instance, the flight path may depend on the direction the operator wants MAV 100 to fly, the type of mission MAV 100 is performing, and/or the type of imagery MAV 100 needs to obtain.

For example, the vehicle can be manually moved in incremental steps in a longitudinal and/or lateral direction. Alternatively, the vehicle could be commanded to fly up or down a guide path toward or away from an object of interest. Still alternatively, the gimbaled camera could lock on a point of interest and the MAV could fly on a circumferential path around the object of interest. Other desired flight paths are possible as well.

### iii. Selecting Velocity Vector Flight Commands to Achieve the Desired Flight Path

Selecting velocity vector flight commands to achieve the desired flight path comprises converting the gimbaled camera attitude data into velocity vector flight commands. The attitude data may be, for example, data relating to the angles of the gimbaled camera. For instance, the attitude data may comprise the gimbaled camera pan angle or the gimbaled camera tilt angle. Converting angles from the gimbaled camera into velocity vector flight commands may vary depending on the desired flight path, and examples are discussed in the following sub-sections.

### 1. Flight Path Corresponding to Longitudinal and Lateral Movement relative to the Target Object of Interest

In an embodiment, a desired flight path may be longitudinal (i.e., front/back) and/or lateral (i.e., left/right) movement relative to the target object of interest. Such a flight path may be useful, for instance, in order to obtain precise imagery of an object of interest. Alternatively, such a flight pattern may be useful for flying toward a horizon. Other examples are possible as well.

The desired longitudinal and lateral movement may be resolved into a velocity vector, such as a North-East velocity vector. The north and east components of the velocity vector may be computed as follows:

$$\dot{E} = v_{longitudinal} \sin(\gamma_{pan}) + v_{lateral} \cos(\gamma_{pan})$$

$$\dot{N} = v_{longitudinal} \cos(\gamma_{pan}) + v_{lateral} \sin(\gamma_{pan})$$

In these above equations, $v_{longitudinal}$ equals the longitudinal velocity of the MAV, $v_{lateral}$ equals the lateral velocity of the MAV, and $\gamma_{pan}$ equals the gimbaled camera pan angle. For the purposes of this disclosure, a North-East coordinate system is used. However, as is known in the art, other coordinate systems are possible as well. These components may lead to a North-East velocity vector, which is shown as below:

$$\begin{bmatrix} \dot{N} \\ \dot{E} \\ 0 \end{bmatrix}$$

This velocity vector flight command may be passed to the MAV flight controls, such as avionics system 120, that control the MAV velocity and heading. Operating the MAV according to the velocity vector is described in more detail below.

**2. Glide path toward or away from the object**

In an embodiment, a desired flight path may be longitudinal (i.e., front/back), lateral (i.e., left/right), and vertical (i.e., up/down) movement relative to the target object of interest. Such a flight path may be useful, for instance, in order to obtain magnification of an object of interest. Other examples are possible as well.

The desired longitudinal, lateral, and vertical movement may be resolved into a velocity vector, such as a North-East-Climb velocity vector. The north, east, and climb components may be computed as follows:

$$'_{vertical} = \begin{cases} v_{vertical\_max}, & if\left(v_{fly\_at} \sin(\gamma_{tilt}) > v_{vertical\_max}\right) \\ v_{fly\_at} \sin(\gamma_{tilt}), otherwise \\ v_{vertical\_min}, & if\left(v_{fly\_at} \sin(\gamma_{tilt}) < -v_{vertical\_min}\right) \end{cases}$$

$$'_{longitudinal} = \left(v_{fly\_at} \cos(\gamma_{tilt})\right)\frac{v_{vertical}}{v_{fly\_at} \sin(\gamma_{tilt})}$$

In these above equations, $v_{longitudinal}$ equals the longitudinal velocity of the MAV, $v_{fly\_at}$ equals the fly-at velocity of the MAV, $v_{vertical}$ equals the vertical velocity of the MAV, $v_{vertical\_max}$ equals the maximum climb velocity based on safe handling limits for the MAV, $v_{vertical\_min}$ equals the maximum descent velocity based on safe handling limits for the MAV, $\gamma_{pan}$ equals the gimbaled camera pan angle, and $\gamma_{tilt}$ equals the gimbaled camera tilt angle.

If the vertical command exceeds the safe handling limits for a vertical climb or descent (which may be different for different UAVs), the component may be reset to the safe handling limit. If this component is reset to the safe handling limit, this forces the longitudinal command to be rescaled to ensure that the gimbaled camera tilt angle is held.

Once these vertical and longitudinal components are determined, the north and east components of the velocity vector may be computed as follows:

$$\dot{E} = v_{longitudinal} \sin(\gamma_{pan}) + v_{lateral} \cos(\gamma_{pan})$$

$$\dot{N} = v_{longitudinal} \cos(\gamma_{pan}) + v_{lateral} \sin(\gamma_{pan})$$

These components lead to a North-East velocity vector, which is shown below:

$$\begin{bmatrix} \dot{N} \\ \dot{E} \\ v_{vertical} \end{bmatrix}$$

This velocity vector flight command may be passed to the MAV flight controls, such as avionics system 120, that control the MAV velocity and heading in order to operate the MAV according to the selected velocity vector flight command. Operating the MAV according to the velocity vector is described in more detail below.

**3. Circumferential Path around the Target Object of Interest**

In another embodiment, a desired flight path may be a path corresponding to a circumferential path around the target object of interest. Such circumferential navigation around a target object of interest may be useful for a variety of scenarios. For example, this type of path may be useful for surveying an area for landing the MAV. It may also be useful for surveying any enemy base camp or an enemy cell. Other examples are possible as well.

The disclosed system supports this by providing a method for keeping the camera pointed at an object while the operator circumnavigates the object using velocity commands from the ground station. In this case, the gimbal angles are adjusted to account for movement of the vehicle unlike in the preceding embodiments.

As mentioned above, a ground control system may include an operator's map display on a screen having touch-screen capability, and an operator may select a target by tapping on the target on the screen. When an operator picks a target point of interest by tapping the point on the map display having touch-screen capability, the point may be relayed to the MAV as a latitude, longitude, and altitude. In an embodiment, after selecting the point, the operator may expect the point of interest to become the point at the center of the display because the system may command the gimbaled camera to point at the target.

The process of pointing the camera at the point of interest while the vehicle is circumnavigated around the point of interest may begin by computing the North, East, and Altitude displacements using the MAV's position at the time the command was received. This calculation may be performed using the following equations:

$$\Delta North = r_{Earth} * \left( Latitude_{meas} - Latitude_{reference} \right)$$

$$\Delta East = r_{Earth} * \left( Longitude_{meas} - Longitude_{reference} \right) * \cos(Latitude_{reference})$$

$$\Delta height = \left( Elevation_{meas} - Elevation_{reference} \right)$$

where,
$r_{Earth}$ is the mean radius of the Earth
Further, $Latitude_{meas}$ is the latitude measurement of the MAV; $Latitude_{reference}$ is the latitude measurement of the point of interest; $Longitude_{meas}$ is the longitude measurement of the MAV; $Longitude_{reference}$ is the longitude measurement of the MAV; $Elevation_{meas}$ is the elevation measurement of the MAV; and $Elevation_{reference}$ is the elevation measurement of the point of interest.

The gimbaled camera's offset from the center of gravity may be computed by performing a quaternion rotation on the x, y, and z offsets to the center of gravity of the camera to the center of gravity of the air-vehicle.

$$[\Delta N_{camera} \quad \Delta E_{camera} \quad \Delta h_{camera}] = \begin{bmatrix} 1-2y^2-2z^2 & 2xy+2wz & 2zx-2wy \\ 2xy-2wz & 1-2x^2-2z^2 & 2yz+2wx \\ 2zx+2wy & 2yz-2wx & 1-2x^2-2y^2 \end{bmatrix} \begin{bmatrix} \Delta x_{camera} \\ \Delta y_{camera} \\ \Delta z_{camera} \end{bmatrix}$$

*where,*
*q is the quaternion representing the rotation from inertial to world frame of reference*

$$q = [w \quad x \quad y \quad z]$$

$\Delta x_{camera}$ is the distance from the vehicle' center of mass to the camera center of mass in the x - direction
$\Delta y_{camera}$ is the distance from the vehicle's center of mass to the camera center of mass in the y - direction
$\Delta z_{camera}$ is the distance from the vehicle's center of mass to the camera center of mass in the z - direction
These may be summed with the MAV drift values to create the drift terms used to compute the servo commands to keep the camera looking at the selected point.

$$command_{azimuth} = \tan^{-1}\left(\frac{\Delta E}{\Delta N}\right),$$

$$command_{elevation} = -\tan^{-1}\left(\frac{\Delta h}{\sqrt{\Delta N^2 + \Delta E^2}}\right)$$

where,
$\Delta N = \Delta North + \Delta N_{camera}$
$\Delta E = \Delta E_{ast} + \Delta E_{camera}$
$\Delta h = \Delta height + \Delta h_{camera}$
The new pointing commands generated by the above equations may be transformed from the Screen Reference Frame (user) coordinate frame to the servo's coordinate frame as shown below

$$DCM(servo_{elevation}, servo_{dummy}, servo_{azimuth}) =$$
$$DCM(command_{elevation}, \theta, (command_{azimuth} - \psi))(-DCM(\phi, \theta, 0))$$

This equation creates a servo offset that includes an additional component equal and opposite to the vehicle's yaw and roll attitude angles.
The following shows the conversion of the commands to offsets in the camera commands (i.e., elevation and azimuth commands).

$$\begin{bmatrix} s_{tilt} \\ s_{dummy} \\ s_{pan} \end{bmatrix} = \begin{bmatrix} \tan^{-1}\left(\frac{DCM[2,3]}{DCM[3,3]}\right) \\ \sin^{-1}(DCM[1,3]) \\ \tan^{-1}\left(\frac{DCM[1,2]}{DCM[1,1]}\right) \end{bmatrix}$$

where, DCM is the direction cosine matrix in 3x3 form. The DCM matrix performs the coordinate transformation of a vector in body axes ($b_x$, $b_y$, $b_z$) into a vector in servo axes ($s_x$, $s_y$, $s_z$). The order of the axis rotations required to bring this about may be:

    i. A rotation about $b_z$ through the yaw angle ($\psi$).
    ii. A rotation about $b_y$ through the pitch angle ($\theta$).
    iii. A rotation about $b_x$ through the roll angle ($\phi$).

$$DCM(\phi,\theta,\psi) = \begin{bmatrix} \cos\theta\cos\psi & \cos\theta\sin\psi & - \\ \sin\phi\sin\theta\cos\psi - \cos\phi\sin\psi & \sin\phi\sin\theta\sin\psi + \cos\phi\sin\psi & \sin \\ \cos\phi\sin\theta\cos\psi + \sin\phi\sin\psi & \cos\phi\sin\theta\sin\psi - \sin\phi\cos\psi & \cos \end{bmatrix}$$

**iv. Operating the Flight of the UAV according to the selected velocity vector flight commands**

After selecting the velocity vector flight command, the flight of the MAV may be operated according to the selected flight command. The flight command may be sent to the vehicle control system, such as avionics system 120, which controls the MAV's velocity and heading. During operating the flight of the MAV according to the selected velocity vector flight commands, the gimbaled camera is preferably adjusted throughout the flight so that the gimbaled camera remains fixed on the target point of interest. This operation allows for the unobstructed view of the object and alleviates the operator's need to continually adjust the gimbaled camera to focus on the object of interest. The gimbaled camera system preferably commands the UAV vehicle heading to ensure that the vehicle stays out of the field of view of the gimbaled camera. The gimbal pan angle may be sent to the vehicle heading controller in the vehicle control system, and the vehicle heading may be adjusted to align the vehicle's roll axis with the gimbaled camera's pan heading. This adjustment ensures that the vehicle stays out of the field of view of the gimbaled camera.

In certain embodiments, the UAV may operate according to the selected flight commands for a limited period of time. For example, the UAV may operate in increments of 5-10 seconds. Other time increments are possible as well.

After operating according to the selected flight commands for a limited period of time, the UAV flight controls may command the UAV to hover until receiving another command from the operator. Operating according to increments of 5-10 seconds may be particularly useful when an operator chooses a flight path corresponding to longitudinal and lateral movement. Such manual reposition commands may be particularly useful to obtain precise imagery. Holding the vehicle in a hover position may prevent the vehicle from running away and may also allow the operator time to reposition the vehicle in a better position for obtaining precise imagery.

Operating a UAV having a gimbaled camera in accordance with embodiments offers numerous advantages. For example, as described above, during operation of a UAV without a gimbaled camera, obtaining desired imagery requires taking the time to fly the aircraft and operating the camera in order obtain the imagery. However, when operating a UAV in accordance with embodiments, obtaining desired imagery and flying the vehicle is simplified. The operator may focus on the desired imagery while the gimbaled camera control system and the avionics system fly the UAV on a desired path relative to the object of interest.

In addition to reducing the number of operators needed to fly a UAV and obtain imagery during the flight, this simplicity beneficially may cut down on the time for obtaining the desired imagery. For example, a process that used to take a matter of minutes for an MAV without the gimbaled system described above could take approximately two or three minutes due to difficulty maneuvering the MAV and the gimbaled camera into the correct positions. However, the gimbaled system in accordance with embodiments could cut down the time to obtain the desired imagery to a matter of seconds due to the flight of the MAV being focused on the imagery. Therefore, the system improves the viewing of targets by making it both easier and quicker. Beneficially, this could shorten mission time or allow the MAV to accomplish more on a mission.

In addition, operating a UAV having a gimbaled camera in accordance with embodiments provides advantages in windy conditions. Since motion of the UAV is resolved around the targeted imagery, during wind gusts, a UAV in accordance with embodiments is operable to remain focused on the imagery or is operable to quickly re-establish focus on the imagery after a wind gust. Rather than having the operator re-establish focus on the imagery after wind gusts, the tightly integrated gimbaled camera system controls and avionics controls may re-establish focus relatively quickly.

Exemplary embodiments of the present invention have been described above. It should be understood the word "exemplary" is used herein to mean "serving as an example, instance, or illustration." Any embodiment described herein as "exemplary" is not necessarily to be construed as preferred or advantageous over other embodiments.

**EP 2 296 070 A1**

**Claims**

1. A method for operating an unmanned aerial vehicle (UAV) comprising a gimbaled sensor, the method comprising:

   receiving a first input associated with a target point of interest;
   pointing the gimbaled sensor at the target point of interest;
   receiving a second input corresponding to a desired flight path;
   selecting a velocity vector flight command to achieve the desired flight path, wherein selecting the velocity vector flight command comprises converting attitude data from the gimbaled sensor into the velocity vector flight command; and
   operating the flight of the UAV according to the selected velocity vector flight command, wherein the gimbaled sensor remains fixed on the target point of interest during the flight of the UAV.

2. The method of claim 1, further comprising during operating the flight of the UAV according to the selected velocity vector flight command, adjusting the gimbaled sensor so that the gimbaled sensor remains fixed on the target point of interest during the flight of the UAV.

3. The method of claim 1, further comprising during operating the flight of the UAV according to the selected velocity vector flight command, adjusting a heading of the UAV so that the UAV stays out of a field of view of the gimbaled sensor.

4. The method of claim 3, wherein the UAV has a roll axis and the gimbaled sensor has a pan heading, and wherein adjusting the UAV heading comprises aligning the UAV roll axis with the gimbaled sensor pan heading.

5. The method of claim 1, wherein operating the flight of the UAV according to the selected velocity vector flight command persists for less than 10 seconds.

6. The method of claim 5, wherein, after operating the UAV according to the selected velocity vector flight command, the UAV hovers until receiving a third input corresponding to a second desired flight path.

7. The method of claim 1, wherein the attitude data comprises gimbaled sensor angle data.

8. The method of claim 1, wherein the desired flight path comprises a flight path corresponding to at least one of longitudinal and lateral movement, and wherein converting attitude data from the gimbaled sensor into the velocity vector flight command comprises converting a pan angle of the gimbaled sensor into a velocity vector flight command.

9. The method of claim 1, wherein the desired flight path comprises a guide path corresponding to at least one of longitudinal, lateral, and vertical movement toward or away from the target point of interest, and wherein converting attitude data from the gimbaled sensor into the velocity vector flight command comprises converting a pan angle of the gimbaled sensor and a tilt angle of the gimbaled sensor into a velocity vector flight command.

10. An unmanned aerial vehicle (UAV) system comprising:

    a UAV having a gimbaled camera;
    a processor;
    data storage comprising instructions executable by the processor for: receiving a first input associated with a target point of interest; pointing the gimbaled sensor at the target point of interest; receiving a second input corresponding to a desired flight path; selecting at least one velocity vector flight command to achieve the desired flight path, wherein selecting the at least one velocity vector flight command comprises converting attitude data from the gimbaled camera into the at least one velocity vector flight command; and
    operating the flight of the UAV according to the at least one selected velocity vector flight command, wherein the gimbaled camera remains fixed on the target point of interest during the flight of the UAV.

FIG. 1

200

START

RECEIVE FIRST INPUT ASSOCIATED WITH TARGET POINT OF INTEREST

202

POINT GIMBALED SENSOR AT TARGET POINT OF INTEREST

204

RECEIVE SECOND INPUT CORRESPONDING TO DESIRED FLIGHT PATH

206

SELECT VELOCITY VECTOR FLIGHT COMMAND BY CONVERTING ATTITUDE DATA FROM GIMBALED SENSOR

208

OPERATE FLIGHT OF MAV ACCORDING TO SELECTED VELOCITY VECTOR FLIGHT COMMAND

210

END

**FIG. 2**

**Europäisches Patentamt**
**European Patent Office**
**Office européen des brevets**

# EUROPEAN SEARCH REPORT

Application Number

EP 09 17 9485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANN-SHING JU ET AL: "Design of intelligent flight control law following the optical payload", NETWORKING, SENSING AND CONTROL, 2004 IEEE INTERNATIONAL CONFERENCE ON TAIPEI, TAIWAN MARCH 21-23, 2004, PISCATAWAY, NJ, USA,IEEE, vol. 2, 21 March 2004 (2004-03-21), pages 761-766, XP010705422, DOI: DOI:10.1109/ICNSC.2004.1297042 ISBN: 978-0-7803-8193-3 * page 761, column 1, line 31 - column 2, line 40 * * page 763, column 1, line 25 - column 2, line 24 * * page 764, column 2, line 5 - line 40 * ----- | 1-10 | INV. G05D1/00 |
| X | QUIGLEY M ET AL: "Target Acquisition, Localization, and Surveillance Using a Fixed-Wing Mini-UAV and Gimbaled Camera", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 April 2005 (2005-04-18), pages 2600-2605, XP010871711, DOI: DOI:10.1109/ROBOT.2005.1570505 ISBN: 978-0-7803-8914-4 * page 2603, column 1, line 5 - column 2, line 37 * * page 2605, column 1, line 3 - line 27 * ----- -/-- | 1-10 | TECHNICAL FIELDS SEARCHED (IPC) G05D |

The present search report has been drawn up for all claims

| Place of search | Date of completion of the search | Examiner |
|---|---|---|
| Munich | 21 December 2010 | Pöllmann, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 296 070 A1

Europäisches
Patentamt
European
Patent Office
Office européen
des brevets

**EUROPEAN SEARCH REPORT**

Application Number

EP 09 17 9485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Procerus Technologies: "OnPoint Targeting v1.3 Vision-Based", <br><br> 18 November 2008 (2008-11-18), XP002614993, <br> Retrieved from the Internet: <br> URL:http://www.procerusuav.com/Downloads/D ataSheets/Procerus_OnPoint_Targeting.pdf <br> [retrieved on 2010-12-21] <br> * the whole document * <br> ----- | 1-10 | |
| A | Procerus Technologies: "Kestrel Autopilot v2.4", <br><br> 18 April 2008 (2008-04-18), XP002614994, <br> Retrieved from the Internet: <br> URL:http://www.procerusuav.com/Downloads/D ataSheets/Kestrel_2.2x.pdf <br> [retrieved on 2010-12-21] <br> * the whole document * <br> ----- | 1-10 | |
| | | | TECHNICAL FIELDS SEARCHED (IPC) |

The present search report has been drawn up for all claims

| Place of search | Date of completion of the search | Examiner |
|---|---|---|
| Munich | 21 December 2010 | Pöllmann, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13